# NEUE EUROPÄISCHE PATENTSCHRIFT

(11) **EP 1 005 692 B2**
(45) Veröffentlichungstag und Bekanntmachung des Hinweises auf die Entscheidung über den Einspruch: **27.12.2006**
(45) Hinweis auf die Patenterteilung: 20.03.2002
(21) Anmeldenummer: 98945256.0
(22) Anmeldetag: 18.08.1998
(51) Int. Cl.: G10K 11/00, B60R 19/48

(54) **MIT DEM STOSSFÄNGER EINES KRAFTFAHRZEUGS VERBUNDENE AUFNAHMEHÜLSE FÜR SENSOREN**
SLEEVE FOR RECEIVING A SENSOR, CONNECTED TO THE BUMPER OF AN AUTOMOBILE
DOUILLE DE FIXATION DE CAPTEURS SOUDEE AU PARE-CHOCS D'UN VEHICULE AUTOMOBILE

(30) Priorität: 21.08.1997 DE 19736274; 30.12.1997 DE 19758075
(43) Veröffentlichungstag der Anmeldung: 07.06.2000
(73) Patentinhaber: Valeo Schalter und Sensoren GmbH, 74321 Bietigheim-Bissingen (DE)
(72) Erfinder: MÜLLER, Harry, D-71711 Steinheim (DE); MATHES, Joachim, D-74080 Heilbronn (DE); WÖLLECKE, Frank, D-71640 Ludwigsburg (DE)
(74) Vertreter: Dreiss, Fuhlendorf, Steimle & Becker
(86) Internationale Anmeldenummer: PCT/EP1998/005240
(87) Internationale Veröffentlichungsnummer: WO 1999/010876

(56) Entgegenhaltungen:
- DE-A- 4 333 066
- DE-A- 19 528 474
- DE-A- 19 601 987
- DE-A- 19 621 964
- FR-A- 2 082 480
- US-A- 3 794 278

## Beschreibung

Die Erfindung betrifft eine Aufnahmeanordnung für Sensoren, insbesondere Sender bzw. Empfänger zur Abstandsmessung. Für derartige Sensoren hat sich der Einbau in den Stoßfänger eines Kraftfahrzeugs bewährt, wie dies beispielsweise in der DE-OS 43 33 066, DE-OS 195 28 474 oder DE-A1-19601987 beschrieben ist. Dabei können die Sensoren sowohl als Strahlungsempfänger als auch als Strahlungssender dienen oder im zeitlichen Nacheinander beide Aufgaben erfüllen. Die genannten bekannten Anordnungen bestehen in der Regel aus einerAufnahmehülse für den Sensor, von der zumindest ein Teil durch eine vorbereitete Öffnung in dem Stoßfänger von dessen dem Fahrzeug abgewandten Außenseite zu dessen Innenseite hin eingeschoben und dann in dem Stoßfänger verankert wird. Da die Lage des Sensors sich in seinem Betriebszustand nicht ändern darf, müssen eine Reihe von Maßnahmen getroffen werden, die die Lage der bekannten Aufnahmeeinrichtungen gegenüber dem Stoßfänger dauerhaft sichern.

Entsprechend der Erfindung werden eine Anordnung nach Anspruch 1 und ein Sensor nach Anspruch 9 beansprucht.

Die Erfindung geht daher aus von einer Befestigungsanordnung der sich aus dem Oberbegriff des Anspruchs 1 ergebenden Gattung. Aufgabe der Erfindung ist es, die Befestigung zu vereinfachen und gegenüber einer möglichen Lageänderung des Sensors noch sicherer zu machen und gleichzeitig durch einen vereinfachten Aufbau der Anordnung die Kosten für den Einbau des Sensors in das Kraftfahrzeug zu verringern.

Die Aufgabe wird durch eine sich aus dem kennzeichnenden Teil des Anspruchs 1 ergebende Merkmalskombination gelöst.

Die Vorgehensweise besteht im Prinzip also darin, die Anordnung im Kern aus zwei Teilen aufizubauen, von denen der eine Teil mit der Stoßstange einstückig verbunden ist und schon bei deren Herstellung an diese angearbeitet wird, während der andere Teil der Anordnung mit dem ersten Teil unlösbarverbunden, insbesondere verschweißt wird. Hierdurch entsteht eine dauerhafte Verbindung der beiden Teile der Anordnung. Da das erste Teil der Anordnung an den Stoßfänger bei dessen Herstellung angegossen oder in diesen eingegossen wird, kann er auch das gleiche Material und Farbgestaltung besitzen und ist äußerst dauerhaft und fest mit dem Stoßfängerverbunden. Außerdem sind die Vorleistungen beim Gießen des Stoßfängers relativ gering, da man das erste Teil so ausgestalten kann, daß seine Abmessungen senkrecht zur Oberfläche des Stoßfängers vergleichsweise sehr klein sind. Das Angießen des ersten Teils ist somit technisch recht einfach. Das erste Teil kann aber auch aus anderem Material als die Stoßstange sein wie z.B. ein Eisenkörper, der mit der Stoßstange vergossen ist. Nach der Erfindung wird das als Aufnahmehülse ausgestaltete zweite Teil auf den als Ansatz ausgestalteten ersten Teil aufgesteckt und ein durch eine Öffnung in der Hülse ragender Vorsprung durch Schweißen derart verformt, daß entweder die beiden Teile miteinander verschweißt sind oder doch zumindest sich an dem Vorsprung des Ansatzes eine räumliche Verformung ergibt, die als Hinterschneidung die Aufnahmehülse festhält. Der zweite Fall ist beispielsweise dann wichtig, wenn die Aufnahmehülse nicht aus Kunststoff, sondern aus Metall oder einem anderen geeigneten Werkstoff geformt wird. Im Rahmen der Erfindung ist es aber auch möglich, die Aufnahmehülse mit dem Ansatz lösbar zu verbinden, z.B. zu verrasten.

Ein weiterer Vorteil der Erfindung besteht darin, daß die mit dem Ansatz zu verbindende, z.B. zu verschweißende Aufnahmehülse an den aufzunehmenden Sensor angepaßt sein kann, so daß an die Stoßstange unterschiedliche Sensoren erfindungsgemäß befestigt werden können. Somit ist die Anordnung in der Regel zwar nicht lösbar an der Stoßstange befestigt, sie läßt sich aber an die verschiedenen Sensortypen leicht anpassen.

Für die Verbindung, insbesondere Schweißung selbst können unterschiedliche Verfahren verwendetwerden. Beispielsweise kann durch ein Warmverformen am Ansatz die notwendige Hinterschneidung zwischen Ansatz und Hülse erreicht werden. In der Praxis hat sich bewährt, für die Aufnahmehülse ebenso wie für den Ansatz Kunststoff zu wählen, wobei die Kunststoffteile bevorzugt durch Ultraschallschweißung miteinander verbunden werden.

Im Prinzip ist die Erfindung für alle Arten von Sensoren geeignet, welche Umweltparameterfür Regeleinrichtungen eines Kraftfahrzeugs messen sollen. Eine besonders vorteilhafte Anwendung für die Erfindung ergibt sich aus der Merkmalskombination nach Anspruch 2. Da die Stoßfänger heute regelmäßig aus Kunststoff geformt werden, ist es erfindungsgemäß besonders zweckmäßig, den Ansatz (Erstteil) der Anordnung gleich mit an den Stoßfänger anzuformen.

Um während des Schweißvorgangs die Lage der Aufnahmehülse gegenüber dem Ansatz zu sichern, kann vorgesehen werden, diese erst leicht an dem Ansatz anzurasten und dann zu verschweißen. Es liegt aber auch im Rahmen der Erfindung, an der dem Fahrzeug zugewandten Innenfläche des Stoßfängers einen zum Fahrzeug hinweisenden Ansatz anzugießen und an diesem Ansatz die Aufnahmehülse mit dem Stoßfänger lösbar zu befestigen, beispielsweise durch Verrasten. Wesentlich ist, daß ein Teil der Aufnahmeanordnung mit der Stoßstange vergossen ist.

Eine besonders einfache Ausgestaltung der Aufnahme erhält man durch die Merkmalskombination nach Anspruch 1. Danach ist der Befestigungsansatz mit mindestens einem Befestigungsvorsprung versehen, welcher durch eine Öffnung in die Aufnähmehülse ragt. Dieser Vorsprung kann mit den angrenzenden Bezirken an der Hülse verschweißt oder auch durch eine Heißverformung formschlüssig verbunden sein. Der Vorsprung kann aber auch mit der Aufnahmehülse verrastet sein, so daß diese lösbar ist.

Eine besonders gute Ausrichtung der Aufnahmehülse gegenüber dem Ansatz und damit dem Stoßfänger wird durch die in Anspruch 3 geschilderte Merkmalskombination erreicht. Danach stehen mehrere Vorsprünge gleichmäßig auf einem Kreisumfang verteilt von der Oberfläche des Stoßfängers ab, so daß die Hülse gegenüber dem Ansatz mehrfach gesichert ist und gegenüber aus allen Richtungen kommenden Quermomenten auf die Hülse die gleiche Stabilität der Befestigung bietet.

An der Hülse sind gleichzeitig noch an sich bekannte Rastlaschen zur lösbaren Aufnahme des Sensors vorgesehen. Durch die nachträgliche Befestigung der Hülse an der Stoßstange kann die Hülse gleichzeitig wie weiter oben schon erläutert, als Adapter für unterschiedliche Sensortypen verwendet werden.

Um den Strahlengang der von dem Sensor abgestrahlten Ultraschall-oder Radarstrahlung zu verbessern, ist der Stoßfänger gemäß der Merkmalskombination nach Anspruch 4 mit einem kreisförmigen Durchbruch versehen, durch welchen der Sensor abstrahlt. Die Kreisförmigkeit des Durchbruchs ist aber nicht zwingend. Es können auch schlitzförmige Durchbrüche vorgesehen werden, beispielsweise um die Keulenform der Sensorstrahlung positiv zu beeinflussen.

Für manche Fälle mag es auch genügen, auf einen Durchbruch im Stoßfänger zu verzichten, sondern diesen nur örtlich in seiner Stärke zu reduzieren, so daß er im Bereich des Sensors als Blende wirkt, die der von dem Sensor abgegebenen Strahlung wie beispielsweise Radarstrahlung nur einen geringen Widerstand entgegensetzt. Radarstrahlung kann im übrigen auch derart gebildet werden, daß sie auch durch eine größere Stärke des Stoßfängers nicht behindert wird.

Insbesondere wenn der Stoßfänger einen Durchbruch besitzt, empfiehlt es sich, dessen Rand mit einer Ringrippe einzufassen und die aus der Stoßfängerfläche hervortretenden Vorsprünge seitlich mit der Mantelfläche der ringförmigen Rippe zu verbinden. Hierdurch erhalten die Vorsprünge eine höhere Verstärkung. Außerdem kann die Stirnfläche der Ringrippe gleichzeitig als Anlagefläche für den Sensor und/oder die Aufnahmehülse des Sensors dienen (s. Anspruch 8). Eine andere und ggf. zusätzliche Anlagemöglichkeit für die Aufnahmehülse ergibt sich aus der Merkmalskombination nach Anspruch 5. Dabei können die Abstandsrippen gleichzeitig einstückig mit den Vorsprüngen verbunden sein, welche zur Fixierung der Aufnahmehülse dienen. Um die Anlagefläche der Hülse zu vergrößern, kann diese gemäß der Merkmalskombination nach Anspruch 5 mit einer umlaufenden Konsole (Bund) versehen sein, welche sich gegen die Abstandsrippen abstützt. Um die Drehwinkellage der Aufnahmehülse eindeutig gegenüber der Stoßstange zu sichern, kann sich in Weiterbildung der Erfindung die Merkmalskombination nach Anspruch 7 empfehlen. Danach können die Vorsprünge nur bei einer bestimmten Drehwinkellage der Aufnahmehülse durch deren zugeordnete Öffnungen durchgreifen, so daß die Aufnahmehülse nicht in falsche Einbaulage gegenüber dem Befestigungsansatz fixiert bzw. verrastet werden kann.

Durch unterschiedliche Höhen der Abstandsrippen kann auch die Abstandshülse bzw. der Sensor mit einer vorgegebenen Neigung gegenüber dem Stoßfänger montiert werden. Wie dies im Zusammenhang mit Ansprüch 6 geschildert ist.

Eine zweite Lösung der Aufgabe ergibt sich aus den Merkmalen nach Anspruch 9. Diese erfinderische Lösung besteht im Kern darin, den Halter nicht durch eine vorzugsweise unlösbare Verbindung über einen Ansatz mit dem Stoßfänger zu verbinden, sondern den Halter in den Stoßfänger einzurasten. Dabei kann, wie bei den weiter oben beschriebenen Ausführungsbeispielen auch, die Platte gekrümmt sein und nur in der Umgebung des Stoßfängers einen ebenen Teil besitzen. Wesentlich ist, daß die Platte in ihrerflächigen Ausdehnung sehr viel größer als in ihrer Dicke ist. Ansonsten ist die Formgebung der Platte im Hinblick auf die Erfindung weniger wichtig. Die Lösung nach Anspruch 9 läßt es zu, den bereits mit dem Sensor bestückten Halter in die Platte einzurasten. Dabei steht die lösbare Verbindung unmittelbar zwischen dem Halter und der Platte selbst. Ein zusätzlicher Ansatz an der Platte bzw. der Stoßstange ist nicht notwendig. Selbstverständlich lassen es die Merkmale der Erfindung zu, daß der Sensor nachträglich von der Rückseite oder der Vorderseite der Platte her in den Halter eingefügt wird. Ein Austausch des Sensors ist daher nach wie vor möglich. Weiterhin ist auch der Halter nur lösbar befestigt, so daß er mit Sensor oder für sich allein genommen ausgetauscht werden kann. Weiterhin kann der Halter als Adapter für mit geänderten Abmessungen versehene Sensoren dienen. In diesem Falle wird ein im wesentlichen mit seinen Innenabmessungen abgeänderter, mit dem Sensor bestückter Halter gegenüber dem älteren H alter ausgetauscht, d. h. der ältere Halter ausgerastet und der neue Halter eingerastet.

Will man den Halter von der Vorderseite her bestücken, so empfiehlt sich in Weiterbildung der Erfindung die Merkmalskombination nach Anspruch 10. Der eingebaute Halter wirkt besonders ansprechend, wenn man ihn mit einem umlaufenden Vorsprung versieht, da hier die geometrische Konfiguration recht einfach wird. Bei der Merkmalskombination nach Anspruch 10 greifen die Rastvorsprünge an der Rückseite der Platte an und sind damit für den Betrachter nicht sichtbar. Eine besonders große Flexibilität erhält man durch die Verwendung der Merkmale nach Anspruch 11. Dabei wird der Sensor mit dem Halter über Rastmittel verrastet. Er kann aber auch in anderer Form (z.B. durch Schrauben) mit dem Halter lösbar verbunden sein oder aber auch unlösbar mit dem Halter verbunden werden. In diesem Falle kann es sich auch als zweckmäßig erweisen, den Halter mit dem Sensorgehäuse einstückig zu vereinen, so daß die Rastmittel und Haltemittel nach den o.a. Merkmalen direkt an das Sensorgehäuse angefügt bzw. mit diesem einstückig vereint sind.

Gelegentlich können die in großen Serien hergestellten Stoßfänger in ihren Abmessungen, insbesondere in ihrer Stärke, etwas voneinander abweichen. Um zu verhindern, daß die Rastverbindung bei dünneren Stoßfängern lockerer wird, empfiehlt sich in Weiterbildung der Erfindung die Merkmalskombination nach Anspruch 12. Die sich an der Rückseite der Platte abstützenden Rastfinger sind somit derart ausgestaltet, daß daß sie bei sich aufspreizenden Rastfingem gleichzeitig eine das vorderseitige Ende des Halters zur Rückseite hin ziehende Kraft ausüben. Somit wird der umlaufende Vorsprung fest gegen den Randbereich der Öffnung auf der Vorderseite des Stoßfängers gezogen. Besonders einfache Rastarme erhält man nach der Merkmalskombination nach Anspruch 13. Dabei werden an die Mantelfläche Rastarme angespritzt, die nur geringfügig unterhalb des Vorsprungs am Halter auslaufen..

Um nun den möglichen Schwenkwinkel für die Rastarme zu begrenzen und hierdurch ein Ausknicken der Rastarme bei Krafteinwirkung auf den Halter zu verhindem, empfiehlt sich in Weiterbildung der Erfindung die Merkmalskombination nach Anspruch 14.

Um das automatisierte Zusammenfügen von Sensor und Halter zu erleichtern, wird in Weiterbildung der Erfindung die Merkmalskombination nach Anspruch 16 vorgeschlagen. Danach sind Halter und Sensor an ihrer Oberfläche derart ausgestaltet, daß ein Zusammenfügen in gegeneinander verdrehtem Zustand nicht möglich wird. Um den Aufbau der genannten Bauelemente zu vereinfachen, wird dabei dafür gesorgt, daß die Rastmittel zum Zusammenfügen von Sensor und Halter zusätzlich auch noch als Drehsicherung wirken. So können beispielsweise die Rastlaschen des Halters eine Verrastung des Halters nur vornehmen, wenn sie in eine entsprechende Nut des Halters einlaufen, Umgekehrt kann ein Verschieben des Sensors in den Halter dadurch verhindert werden, daß in verkehrter Drehlage Sperrwände am Sensor gegen die Enden der Rastlaschen laufen und so eine Einschubbewegung des Sensors in den Halter bei verkehrter Drehlage verhindern. Wie weiter oben schon erläutert, ist aber auch eine abweichende Reihenfolge des zusammenfügens der Teile möglich. Die Erfindung läßt es aber auch zu, den Sensor in den in die Stoßstange eingerasteten Halter einzurasten. Dabei kann die Einschubbewegung im Prinzip von der Vorderseite oder der Rückseite des Stoßfängers her geschehen. Dabei wird man einen Einbau von der Vorderseite her begrüßen, da bei zusammengesetztem Fahrzeug die Rückseite des Stoßfängers schwer zugänglich ist.

Ein Ausführungsbeispiel der Erfindung wird nachfolgend anhand der Zeichnung erläutert. Darin zeigt:
- Fig. 1: den Ansatz einer ersten Ausführungsform der Erfindung auf der Innenfläche des Stoßfängers.
- Fig. 2: den gleichen Ansatz wie Fig. 1 von der Außenfläche des Stoßfängers gesehen.
- Fig. 3 und 4: die Aufnahmehülse aus zwei verschiedenen Blickrichtungen.
- Fig. 5: in auseinandergezogener Darstellung die Aufnahmehülse gegenüber dem Befestigungsansatz.
- Fig. 6: die Aufnahmehülse nach Fig. 5, wobei der Befestigungsansatz gegenüber der Stoßfängerinnenfläche eine geneigte Stirnfläche besitzt.
- Fig. 7: die auf den Ansatz nach Fig. 5 aufgesetzte Befestigungshülse und
- Fig. 8: die Verformung der Vorsprünge des Ansatzes nach Fig. 7.
- Fig. 9 bis 11: eine zweite Ausführungsform der Erfindung

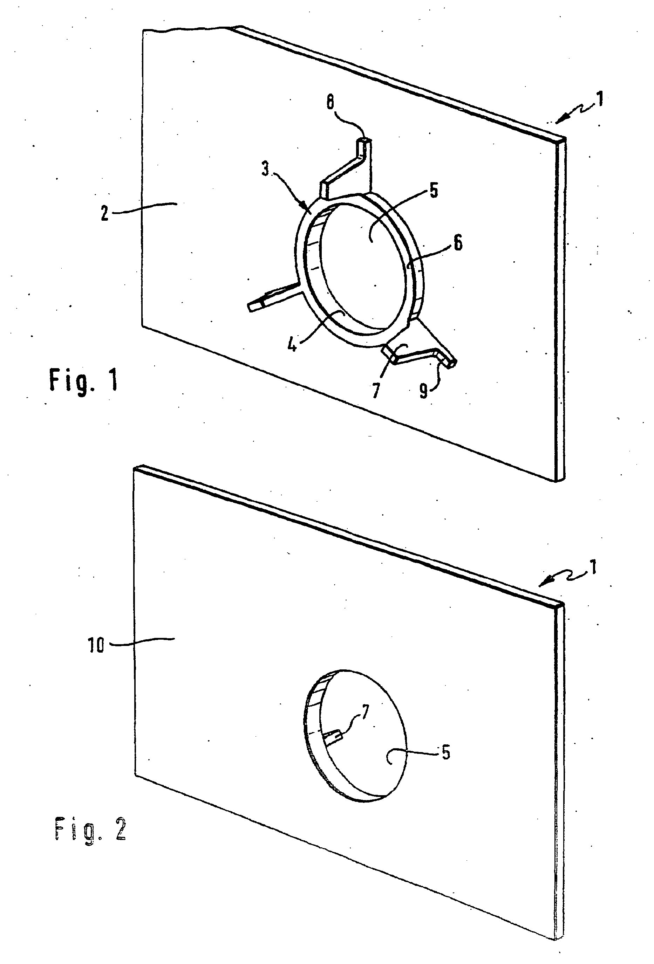

Fig. 1 zeigt einen Ausschnitt des Stoßfängers 1, an dessen Innenfläche 2 ein Befestigungsansatz angegossen ist. Der Befestigungsansatz weist im eingebauten Zustand von der Innenfläche des Stoßdämpfers zum Fahrzeug hin. Der Befestigungsansatz 3 hat eine Ringrippe 4, welche einen Durchbruch 5 im Stoßfänger 1 umfaßt. Die Stirnfläche 6 der Ringrippe 4 dient gleichzeitig als Anlagefläche für die in Fig.1 nicht dargestellte Aufnahmehülse.

Drei Vorsprünge 7 stehen senkrecht von der Innenfläche 2 des Stoßfängers 1 ab und lehnen sich mit einem unteren Abschnitt an die äußere Mantelfläche der Ringrippe 4 an, wobei sie durch den Materialschluß eine höhere Festigkeit erhalten.

Die Vorsprünge 7 gehen radial nach außen in Abstandsrippen 8 über, deren zur Innenfläche 2 des Stoßfängers 1 im wesentlichen parallele Vorderflächen 9 als Auflage für eine umlaufende Konsole der Aufnahmehülse dienen.

Fig. 2 zeigt die Außenfläche eines dem Abschnitt nach Fig. 1 entsprechenden Abschnitts des Stoßfängers 1 und damit die in Fig. 1 nicht sichtbare Seite des Stoßfängers. Durch den Durchbruch 5 in Fig. 2 ist ein von der nicht dargestellten Innenfläche abstehender Vorsprung 7 erkennbar. Damit ergibt sich eine sehr glatte Außenfläche 10 für den Stoßfänger., die gut bearbeitbar und insbesondere lackierbar ist.

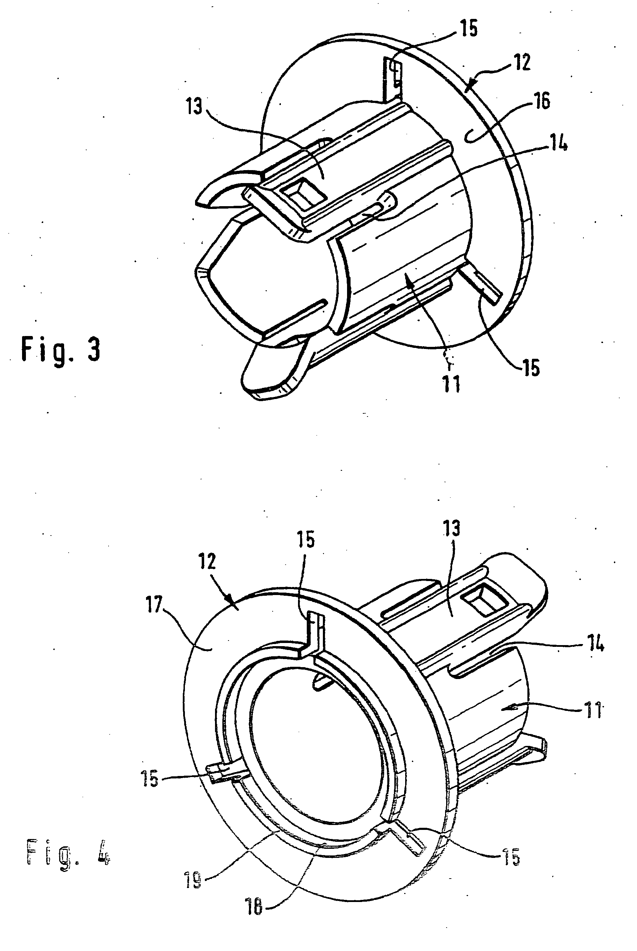

Fig. 3 zeigt die Aufnahmehülse 11 , die an ihrem der Innenfläche 2 des Stoßfängers 1 zugewandten Ende eine umlaufende Konsole 12 aufweist. Die Hülse 11 ist mit federnden Rastlaschen 13 versehen, die durch seitliche, bis zu der Konsole 12 ragende Schlitze aus der Hohlzylinderwand der Aufnahmehülse 11 herausgearbeitet sind. Für die Befestigung der Aufnahmehülse 11 an dem Befestigungsansatz 3 wichtig sind drei Öffnungen 15 in der Aufnahmehülse, die gleichmäßig über den Umfang eines Kreises verteilt sind. Durch diese Öffnungen können die Vorsprünge 7 nach Fig. 1 hindurchtreten und die Konsole 12 hintergreifen.

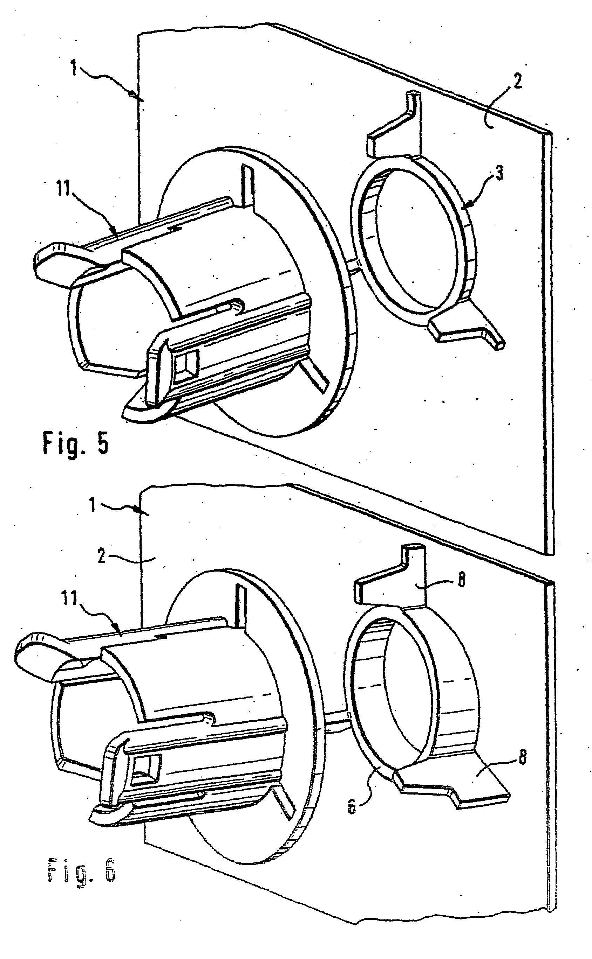

Fig. 4 zeigt die der Hinterfläche 16 gegenüberliegende Vorderfläche 17 der Konsole 12 der Aufnahmehülse 11 gemäß Fig. 3. Aus Fig. 4 ist weiterhin ein Ringbund 18 zu erkennen, mit dessen Stirnfläche 19 sich die Aufnahmehülse 11 an der Stirnfläche 6 der Ringrippe 4 (Fig. 1) abstützt.

Die Wirkungsweise der Rastlaschen 13 ist im Zusammenhang mit der DE-OS 195 28 474 beschrieben und soll an dieser Stelle nicht nochmals erläutert werden.

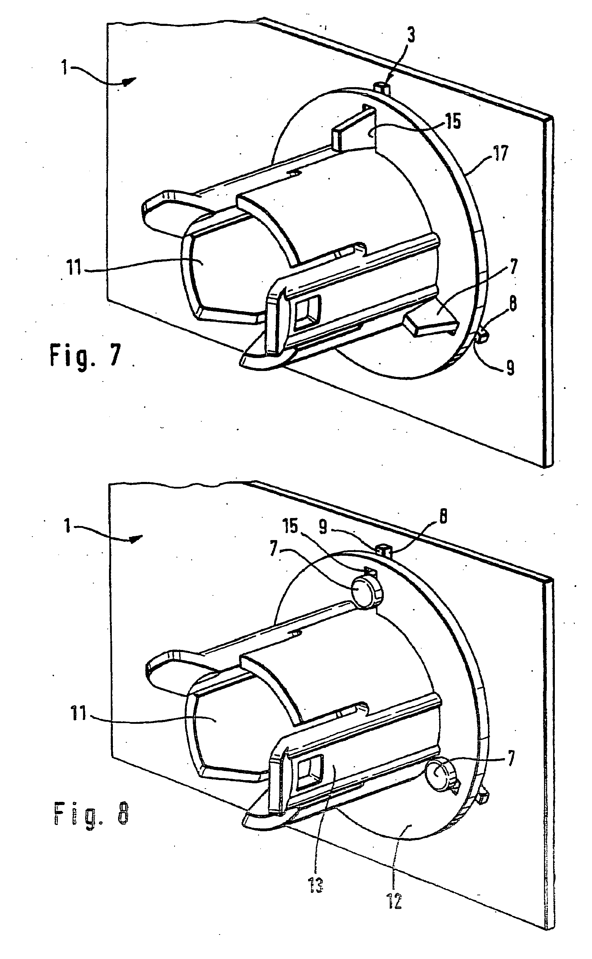

Fig: 5 zeigt in auseinandergezogener Darstellung den Ansatz 3 mit in Einbaurichtung gegenüberliegender Aufnahmehülse 11 vor der Verbindung dieser beiden Teile der erfindungsgemäßen Befestigungsanordnung. Fig. 6 zeigt im wesentlichen die gleiche Anordnung wie Fig. 5. Der besondere Unterschied liegt darin, daß die Abstandsrippen 8 eine unterschiedliche Höhe haben, so daß wunschgemäß die Aufnahmehülse 11 gegenüberder Innenfläche 2 des Stoßfängers 1 geneigt aufgesetztwerden kann. Dementsprechend ist auch die durch die Stirnfläche 6 aufgespannte Ebene gegenüber der Innenfläche 2 des Stoßfängers 1 geneigt. Man erhält hierdurch eine bestimmte Neigung des Sensors gegenüber der Fläche der Fahrbahn, die zu Meßzwecken erwünscht ist.

Fig. 7 zeigt die auf den Befestigungsansatz 3 aufgesetzte Aufnahmehülse 11, wobei die Vorsprünge 7 durch die Öffnungen 15 der Aufnahmehülse 11 ragen. Gleichzeitig liegt die Vorderfläche 17 der Konsole 12 auf den Vorderflächen 9 der Abstandsrippen 8 auf. Zusätzlich liegt die Stirnfläche 19 des Ringbundes 15 an der Stirnfläche 6 der Ringrippe 4 an (in Fig. 7 nicht gezeigt). Fig. 8 zeigt schließlich die Verformung der Vorsprünge 7 durch Ultraschallschweißen oder ein anderes geeignetes Formverfahren. Dabei kann das Material der Vorsprünge an der Grenzfläche zu der Aufnahmehülse mit deren Kunststoff verschmelzen. Dies ist aber für die Erfindung nicht notwendig.

Die Erfindung läßt sich zusammenfassend mit anderen Worten wie folgt angeben:

Ein Ultraschallwandler soll im Fahrzeug (z.B. im Stoßfänger) befestigt werden. Die vorgeschlagene Lösung besteht aus einer einteiligen Halterung mit ausgebildetern Flansch, die hinter eine Öffnung im Stoßfänger, an welchen kleine Rippen angespritzt sind, aufgesteckt wird und die Rippen anschließend per Ultraschallschweißung dergestalt verformt werden, daß es zu einer formschlüssigen Verbindung zwischen deformierter Rippe und Halter bzw. Flansch, kommt.

Zur Lagefixierung weist der Halter am Flansch noch einen zusätzlichen B und auf, welcher die Koaxialität zwischen Halter und Bohrung im Stoßfänger sicherstellt. Der Flansch selbst ist mit Durchbrüchen versehen, durch welche die am Stoßfänger bzw. an der Stoßleiste angespritzten Rippen beliebiger Querschnittsform durchtauchen können, um anschließend per Ultraschall deformiert zu werden und eine formschlüssige Verbindung herzustellen.

Durch Absätze an den Rippen, welche in einer bestimmten Ebene ausgeformt sind, kann zusätzlich noch eine Richtungsorientierung integriert werden, und der Halter somit auch unter verschiedenen Neigungen in den Stoßfänger bzw. -leiste gebracht werden.

### Vorteile:

- einfache Montage
- ein Halter für alle Positionen
- Optisch ansprechende Lösung.

Durch die oben beschriebene Ausbildung von Absätzen an den Rippen ist die Verwendung von einem Standardhalter auch mit unterschiedlicher räumlicher Orientierung möglich. Hierdurch ergibt sich ein Logistik- und Verwaltungsvorteil durch Reduktion der Anzahl der für die Ausrüstung des Fahrzeuges notwendige Anzahl der Halter unabhängig von der Krümmung des Stoßfängers.

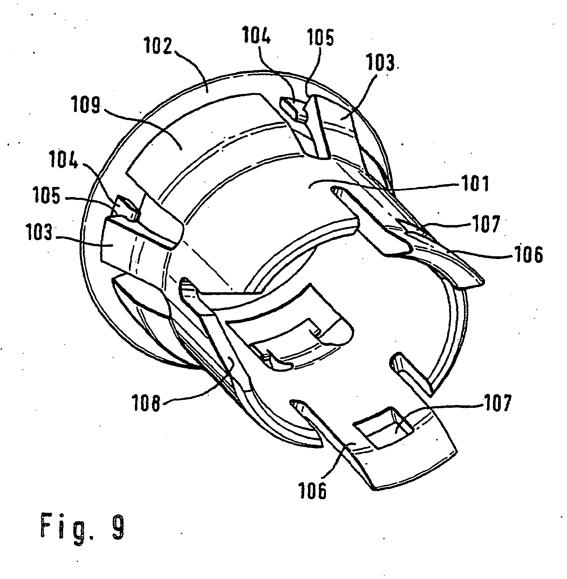

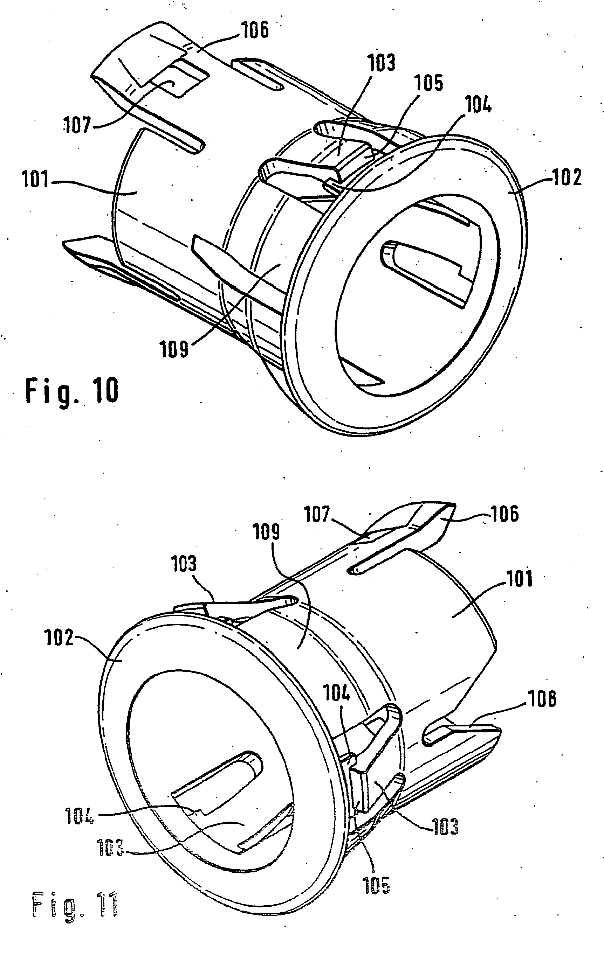

Eine zweite Ausführungsform der Erfindung wird anhand der Fig. 9 bis 11 beschrieben. Fig. 9 zeigt den Halter 101, der im wesentlichen die Form eines Hohlzylinders hat. Der Halter trägt an seinem der Vorderseite des nicht dargestellten Stoßfängers zugewandten Ende einen umlaufenden Vorsprung 102, der sich am Rand der nicht dargestellten Öffnung abstützt, durch den der Halter in der Platte eingeschoben wird.

Wichtig für die Erfindung sind die nach außen geneigten elastischen Rastvorsprünge 103. Diese Vorsprünge sind in ihrer Ruhelage so weit nach außen geneigt, daß sie einen kreisförmigen Außen umfang aufspannen, welcher einen größeren Durchmesser besitzt als die Öffnung, durch die der Halter 101 bis zu dem Anschlag 102 (umlaufender Vorsprung) hindurchgeschoben wird. Mit anderen Worten: beim Durchschieben des Halters durch die Öffnung werden die federnden Rastvorsprünge durch die Innenkontur der Öffnung nach innen geschwenkt und springen dann wieder nach außen, sobald sie den Rand der Öffnung passiert haben. Hierdurch wird der Halter 101 gegenüberder Platte verriegelt, da die Rastvorsprünge auf der Rückseite den Rand der Öffnung hintergreifen. Dabei ist die Stärke der Rastvorsprünge derart gewählt, daß sie auch bei eingerastetem Sensor (nicht dargestellt) genug Raum besitzen, um gegenüber dem Rand der Öffnung nach innen ausweichen zu können. Damit läßt sich der mit dem Sensor bestückte Halter durch die Öffnung schieben, wonach er verrastet.

An den Enden der Rastvorsprünge 103 sind Anschläge 104 angeordnet bzw. angegossen, die an den inneren Rand der Öffnung beim Herausschwenken der Rastvorsprünge 103 anschlagen und somit die nach außen gerichtete Schwenkbewegung der Rastvorsprünge 103 im eingebauten Zustand des Halters 101 begrenzen.

An den dem umlaufenden Vorsprung 102 zugewandten Ende der Rastvorsprünge sind die Stirnflächen mit einer radial nach innen ansteigenden Neigung versehen. Diese so beschriebenen Angriffsflächen 105 haben daher die Eigenschaft, beim Herausschwenken der Rastvorsprünge 3 während des Rastvorgangs sich an der Innenkante der Öffnung in der Platte abzustützen und dabei den Halter 101 weiter durch die Öffnung zu ziehen, bis der umlaufende Vorsprung 102 sicher an dem Öffnungsrand auf der Vorderseite des Stoßfängers anschlägt. Auf diese Weise verklemmt sich der Halter 101 selbsttätig mit dem Umgebungsbereich der Öffnung. Der obere Abschnitt 109 des Halters ist etwas konisch nach außen geneigt und bildet somit eine Zentrierung des Halters gegenüber der Öffnung. An dem in Fig. 9 dem Betrachter zugewandten Ende des Halters 101 sind als Rastmittel Rastlaschen 106 vorgesehen, welche Rastausnehmungen 107 besitzen. Beim Einfügen des Sensors werden die Rastlaschen aufgebogen. Der nicht gezeigte Sensor besitzt den Rastöffnungen 107 zugeordnete Vorsprünge, die im eingerasteten Zustand von den Rastöffnungen 107 umgriffen werden und so den Sensor halten. Beim Ausführungsbeispiel besitzt der Halter 101 zwei Rastlaschen 106. Es können aber auch noch weitere Rastlaschen Verwendung finden oder aber auch nur eine einzige Rastlasche vorgesehen sein. Fig.11 läßt einen in den Halter101 eingearbeiteten seitlichen Führungsschlitz 108 erkennen, welcher als Drehsicherungsmittel dient, so daß ein in den Halter 101 eingeschobener mit einem entsprechenden Führungsvorsprung versehener Sensor selbsttätig in die richtige Drehlage gebracht wird.

Der erfindungsgemäße Halter ist regelmäßig so ausgelegt, daß er mit bestücktem Sensor in die Plattenöffnung eingeschoben werden kann und dort mit der Platte verrastet wird.

Es ist im Rahmen der Erfindung aber auch denkbar, daß die Abmessungen hinsichtlich der Stärke der Rastvorsprünge und der Anschläge derart ausgestaltet wird, daß der Halter ohne Sensor in der Öffnung verrastet werden kann und der nachträglich in den eingerasteten Halter eingeschobene Sensor mit seiner Außenkontur für eine weitere Aufspreizung der Rastvorsprünge und damit eine selbsttätige Sicherung der Verrastung sorgt.

## Patentansprüche

1. Anordnung zur Befestigung eines Sensors an einer aus Kunststoff gebildeten Platte oder einem Kunststoffteil (1) eines Kraftfahrzeugs, wobei an dem Kunststoffteil (1) ein Befestigungsansatz (3) einstückig angegossen ist, wobei eine Aufnahmehülse (11) für den Sensor auf den Ansatz (3) aufgesteckt und an mindestens einer geeigneten Verbindungsstelle (7, 15) die Aufnahmehülse (11) mit dem Befestigungsansatz (3) vorzugsweise durch eine nicht lösbare Verbindung, insbesondere Schweißen, verbunden ist, **dadurch gekennzeichnet, daß** der Befestigungsansatz mit mindestens einem Befestigungsvorsprung (7) versehen ist, welcher im aufgesetzten Zustand der Aufnahmehülse (11) durch eine zugeordnete Öffnung (15) in der Aufnahmehülse (11) ragt und daß im fixierten Zustand der Aufnahmehülse das freie Ende des Vorsprungs (7) den umgebenden Randbereich der Öffnung (15) durch Verformung vorzugsweise mittels Schweißen hintergreift.

2. Anordnung nach Anspruch 1, **dadurch gekennzeichnet, daß** das Kunststoffteil (1) ein Stoßfänger und der Sensor ein mit Ultraschall arbeitender Abstandssensor ist.

3. Anordnung nach Anspruch 1 oder 2 **dadurch gekennzeichnet, daß** die Aufnahmehülse (11) aus Kunststoff geformt ist und mehrere gleichmäßig auf dem Umfang eines Kreises verteilte Vorsprünge (7) im wesentlichen senkrecht von der Innenfläche (2) des Kunststoffteils abstehen, daß die Aufnahmehülse im wesentlichen hohizylinderförmig ist und an ihren dem Befestigungsansatz (3) abgewandten Ende mit Rastlaschen (13) zur lösbaren Befestigung eines Sensors versehen ist.

4. Anordnung nach einem der vorangegangenen Ansprüche, **dadurch gekennzeichnet, daß** der Stoßfänger mit einem kreisförmigen Durchbruch (5) versehen ist.

5. Anordnung nach einem der vorangegangenen Ansprüche, **dadurch gekennzeichnet, daß** der Befestigungsansatz (3) und/oder das Kunststoffteil (1) mit Abstandsrippen (8) versehen ist, gegen die im Einbauzustand die Stirnfläche eines umlaufenden Bundes (18 und/oder 12) der Aufnahmehülse (11) anliegt.

6. Anordnung nach einem der vorangegangenen Ansprüche, **dadurch gekennzeichnet, daß** die Höhe der Abstandsrippen (8) so gewählt ist, daß die Konsole (12) mit einer vorgegebenen Neigung gegenüber dem Kunststoffteil (1) an den Abstandsrippen (8) anliegt.

7. Anordnung nach einem der vorangegangenen Ansprüche, **dadurch gekennzeichnet, daß** die Abmessungen der Vorsprünge (8) und der diesen zugeordneten Öffnungen (15) derart festgelegt sind, daß die Aufnahmehülse (7) nur in einer vorgegebenen Drehlage an dem Ansatz (3) befestigbar ist.

8. Anordnung nach einem der vorangegangenen Ansprüche, **dadurch gekennzeichnet, daß** die dem Kunststoffteil (1) abgewandte Stirnfläche (6) der Ringrippe (4) als Anlagefläche für die dem Kunststoffteil (1) zugewandte Stirnfläche eines Sensors dient.

9. Mit einer Anordnung zur Befestigung an einer Platte, insbesondere Stoßfänger eines Kraftfahrzeugs versehener Sensor, vorzugsweise Abstandssensor, wobei die Anordnung einen im wesentlichen zylinderförmigen Halter (101) aufweist, der durch eine Öffnung in der Platte ragt, und durch mindestens einen die Platte hintergreifenden elastischen Rastvorsprung (103) mit der Platte lösbar verbindbar ist, **dadurch gekennzeichnet, dass** der Sensor in die der Platte abgewandte Seite des Halters einschiebbar ist.

10. Sensor nach Anspruch 9, **dadurch gekennzeichnet, daß** der Halter (101) mittels eines vorzugsweise umlaufenden seitlichen Vorsprungs (102) an der Vorderseite der Platte abstützt, während der bzw. die Rastvorsprünge (103) an der Rückseite der Platte angreifen.

11. Sensor nach Anspruch 9, **dadurch gekennzeichnet, daß** der Halter (101) mit ersten Rastmitteln (106, 107) versehen ist; über welche der mit zugeordneten zweiten Rastmitteln versehene Sensor mit dem Halter (101) lösbar verrastbar ist.

12. Sensor nach einem der vorangegangenen Ansprüche, **dadurch gekennzeichnet, daß** der Rastvorsprung (103) mit einer genetgten Angriffsfläche (105) sich an der Rückseite der Platte, vorzugsweise im Umgebungsbereich der Öffnung abstützt, wobei die Neigung derart gewählt ist, daß hierdurch eine Kraft auf den Halter (101) ausgeübt wird, die von der Vorderseite der Platte nach deren Rückseite gerichtet ist.

13. Sensor nach einem der vorangegangenen Ansprüche, **dadurch gekennzeichnet, daß** die Rastvorsprünge (103) von der Mantelfläche des Halters (101) abstehende elastische Rastarme sind, die bevorzugt etwas unterhalb des Vorsprungs (102) auslaufen.

14. Sensor nach einem der vorangegangenen Ansprüche, **dadurch gekennzeichnet, daß** die freien Enden der Rastarme (103) mit Anschlägen (104) versehen sind, die am Innenrand der Öffnung der Platte angreifen und die Auswärtsbewegung der Rastarme (103) begrenzen.

15. Sensor nach einem der vorangegangenen Ansprüche, **dadurch gekennzeichnet, daß** die geneigten Angriffsflächen (105) in die Stirnflächen der Rastarme (103) eingefügt sind.

16. Sensor nach einem der vorangegangenen Ansprüche, **dadurch gekennzeichnet, daß** der Halter (101) und der Sensor mit einander zugeordneten Drehsicherungsmitteln (108) versehen sind, die das Verrasten der beiden Elemente nur in einer vorgegebenen Drehlage erlauben.

## Claims

1. Configuration for mounting a sensor to a plate made from plastic or a plastic component (1) of a motor vehicle, wherein a mounting shoulder (3) is molded as an integral piece onto the plastic component (1) and a sleeve (11) for the sensor is plugged onto the shoulder (3) and connected to the mounting shoulder (3) preferentially by means of a non-detachable connection, in particular welding, at at least one suitable connection location (7, 15), **characterized in that** the mounting shoulder has at least one mounting protrusion (7) which penetrates through an associated opening (15) in the sleeve (11) in the mounting state of the sleeve (11) and, in the fixed state of the sleeve, the free end of the protrusion (7) is deformed, preferentially by means of welding, to engage behind the surrounding edge region of the opening (15).

2. Configuration according to claim 1, **characterized in that** the plastic component (1) is a bumper and the sensor is a distance sensor using ultrasound.

3. Configuration according to claim 1 or 2, **characterized in that** the sleeve (11) is made from plastic and a plurality of protrusions (7) are evenly distributed about the periphery of a circle and protrude substantially perpendicularly from the inner surface (2) of the plastic component, wherein the sleeve has a substantially hollow cylindrical shape and has latches (13) at its end facing away from the mounting shoulder (3) for the detachable mounting of a sensor.

4. Configuration according to any one of the preceding claims, **characterized in that** the bumper has a circular hole (5).

5. Configuration according to any one of the preceding claims, **characterized in that** the mounting shoulder (3) and/or the plastic component (1) has spacer ribs (8) against which the end surfaces of a peripheral collar (18 and/or 12) of the sleeve (11) seat in the inserted state.

6. Configuration according to any one of the preceding claims, **characterized in that** the height of the spacer ribs (8) is chosen in such a fashion that the console (12) seats on the spacer ribs (8) with a predetermined tilt relative to the plastic component (1).

7. Configuration according to any one of the preceding claims, **characterized in that** the dimensions of the protrusions (8) and of the associated openings (15) are chosen in such a fashion that the sleeve (7) can be mounted to the shoulder (3) only in a predetermined angular orientation.

8. Configuration according to any one of the preceding claims, **characterized in that** the end surface (6) of the ring rib (4) facing away from the plastic component (1) serves as a seating surface for the end surface of a sensor facing the plastic component (1).

9. A sensor having a configuration for mounting to a plate, in particular, to a bumper of a motor vehicle, preferentially a distance sensor, wherein the configuration comprises a substantially cylindrical holder (101), which penetrates through an opening in the plate and can be connected to the plate in a detachable fashion by means of at least one elastic latching protrusion (103) engaging behind the plate, **characterized in that** the sensor can be inserted into the side of the holder that faces away from the plate.

10. Sensor according to claim 9, **characterized in that** the holder (101) seats by means of a preferentially peripheral running circumferentially protrusion (102) on the front side of the plate when the latching protrusion or latching protrusions (103) engage the backside of the plate.

11. Sensor according to claim 9, **characterized in that** the holder (101) has first snapping members (106, 107) by means of which the sensors having associated second snapping means can be latched to the holder (101) in a detachable fashion.

12. Sensor according to any one of the preceding claims, **characterized in that** a tilted engagement surface (105) of the latching protrusions (103) is supported against the backside of the plate, preferentially in the region surrounding the opening, wherein the tilt is chosen in such a fashion that a force is thereby exercised on the holder (101) directed from the front of the plate towards the rear side thereof.

13. Sensor according to any one of the preceding claims, **characterized in that** the latching protrusions (103) are resilient latching arms projecting beyond the outer surface of the holder (101) which preferentially end somewhat below the protrusion (102).

14. Sensor according to any one of the preceding claims, **characterized in that** the free ends of the latching arms (103) have stops (104) which engage at the inner edge of the opening in the plate and limit the outward motion of the latching arms (103).

15. Sensor according to any one of the preceding claims, **characterized in that** the tilted engagement surfaces (105) are disposed in the end surfaces of the latching arms (103).

16. Sensor according to any one of the preceding claims, **characterized in that** the holder (101) and the sensor are provided with mutually cooperating means for protection against torsion (108) which permit latching together of the two elements only in a predetermined rotational orientation.

## Revendications

1. Agencement de fixation d'un capteur à une plaque formée dans une matière plastique ou à un élément en matière plastique (1) d'un véhicule automobile, dans lequel un appendice de fixation (3) est coulé d'une seule pièce sur l'élément en matière plastique (1), dans lequel une douille (11) de réception du capteur est emboîtée sur l'appendice (3), et, en au moins un emplacement de liaison (7, 15) approprié, la douille de réception (11) est reliée à l'appendice de fixation (3), de préférence par une liaison non séparable, en particulier par soudage, **caractérisé en ce que** l'appendice de fixation est pourvu d'au moins une saillie de fixation (7) qui, à l'état emboîté de la douille de réception (11), traverse une ouverture associée (15) de la douille de réception (11), et **en ce qu'**à l'état fixé de la douille de réception, l'extrémité libre de la saillie (7) passe derrière et est en prise avec la zone de bordure entourant l'ouverture (15), par déformation, de préférence par soudage.

2. Agencement selon la revendication 1, **caractérisé en ce que** l'élément en matière plastique (1) est un pare-chocs et le capteur est un capteur de distance qui fonctionne aux ultrasons.

3. Agencement selon la revendication 1 ou 2, **caractérisé en ce que** la douille de réception (11) est moulée dans une matière plastique et plusieurs saillies (7) régulièrement réparties sur la circonférence d'un cercle dépassent sensiblement perpendiculairement de la surface intérieure (2) de l'élément en matière plastique, **en ce que** la douille de réception a sensiblement la forme d'un cylindre creux et est pourvue, à son extrémité tournée à l'opposé de l'appendice de fixation (3), de pattes d'encliquetage (13) pour la fixation amovible d'un capteur.

4. Agencement selon l'une quelconque des revendications précédentes, **caractérisé en ce que** le pare-chocs est pourvu d'un ajour (5) de forme circulaire.

5. Agencement selon l'une quelconque des revendications précédentes, **caractérisé en ce que** l'appendice de fixation (3) et/ou l'élément en matière plastique (1) sont pourvus de nervures d'écartement (8) contre lesquelles s'applique, à l'état monté, la surface frontale d'un épaulement périphérique (18 et/ou 12) de la douille de réception (11).

6. Agencement selon l'une des revendications précédentes, **caractérisé en ce que** la hauteur des nervures d'écartement (8) est choisie de manière que la console (12) s'applique sur les nervures d'écartement (8), avec une inclinaison prédéfinie par rapport à l'élément en matière plastique (1).

7. Agencement selon l'une quelconque des revendications précédentes, **caractérisé en ce que** les dimensions des saillies (7) et des ouvertures (15) associées à celles-ci sont définies de manière que la douille de réception (11) ne puisse être fixée à l'appendice (3) que dans une position de rotation prédéterminée.

8. Agencement selon l'une quelconque des revendications précédentes, **caractérisé en ce que** la surface frontale (6), tournée à l'opposé de l'élément en matière plastique (1), de la nervure annulaire (4), sert de surface d'application pour la surface frontale d'un capteur tournée vers l'élément en matière plastique (1).

9. Capteur pourvu d'un agencement de fixation à une plaque, en particulier un pare-chocs d'un véhicule automobile, de préférence capteur de distance, l'agencement comportant un support (101) de forme sensiblement cylindrique qui traverse une ouverture de la plaque et peut être relié à la plaque, de manière amovible, par au moins une saillie d'encliquetage (10) élastique passant derrière la plaque, **caractérisé en ce que** le capteur peut être introduit dans le côté du support opposé à la plaque.

10. Capteur selon la revendication 9, **caractérisé en ce que** le support (101) prend appui, au moyen d'une saillie (102) latérale de préférence périphérique, contre le côté avant de la plaque, tandis que la ou les saillies (103) agissent sur la face arrière de la plaque.

11. Capteur selon la revendication 9, **caractérisé en ce que** le support (101) est pourvu de premiers moyens d'encliquetage (106, 107), par lesquels le capteur, pourvu de seconds moyens d'encliquetage associés, peut s'accrocher de manière séparable avec le support (101).

12. Capteur selon l'une quelconque des revendications 9 à 11, **caractérisé en ce que** la saillie d'encliquetage (103) prend appui, par une surface d'attaque (105) inclinée, contre la face arrière de la plaque, de préférence dans la zone entourant l'ouverture, l'inclinaison étant choisie de manière que par là s'exerce sur le support (101) une force qui est orientée depuis la face avant de la plaque vers sa face arrière.

13. Capteur selon l'une quelconque des revendications 9 à 12, **caractérisé en ce que** les saillies d'encliquetage (103) sont des bras d'encliquetage élastiques qui dépassent de la surface d'enveloppe du support (101) et qui se terminent de préférence un peu au-dessous de la saillie (102).

14. Capteur selon l'une quelconque des revendications 9 à 13, **caractérisé en ce que** les extrémités libres des bras d'encliquetage (103) sont pourvues de butées (104) qui agissent sur le bord intérieur de l'ouverture de la plaque et qui limitent le mouvement vers l'extérieur des bras d'encliquetage (103).

15. Capteur selon l'une quelconque des revendications 9 à 14, **caractérisé en ce que** les surfaces d'attaque (105) inclinées sont insérées dans les surfaces frontales des bras d'encliquetage (103).

16. Capteur selon l'une quelconque des revendications 9 à 15, **caractérisé en ce que** le support (101) et le capteur sont pourvus de moyens de blocage de rotation (108), associés les uns aux autres, qui permettent l'accrochage des deux éléments uniquement dans une position de rotation prédéterminée.
